Europäisches Patentamt

European Patent Office

Office européen des brevets

(11) Publication number : **0 498 582 A2**

# EUROPEAN PATENT APPLICATION

(21) Application number : **92300868.4**

(22) Date of filing : **31.01.92**

(51) Int. Cl.⁵ : **G06K 7/10,** G06K 19/07

(30) Priority : **31.01.91 JP 54158/91
05.06.91 JP 161111/91**

(43) Date of publication of application :
**12.08.92 Bulletin 92/33**

(84) Designated Contracting States :
**DE FR GB NL SE**

(71) Applicant : **NEC CORPORATION
7-1, Shiba 5-chome Minato-ku
Tokyo 108-01 (JP)**

(72) Inventor : **Ichihara, Masaki, c/o NEC
Corporation
7-1, Shiba 5-chome
Minato-ku, Tokyo (JP)**
Inventor : **Hatakeyama, Naoto, c/o NEC
Corporation
7-1, Shiba 5-chome
Minato-ku, Tokyo (JP)**

(74) Representative : **Orchard, Oliver John
JOHN ORCHARD & CO. Staple Inn Buildings
North High Holborn
London WC1V 7PZ (GB)**

(54) **IC card information read/write system.**

(57)   An IC card information read/write system is constituted with an IC card and a read/write apparatus. The IC card includes a solar cell and an LCD, whereas the card read/write apparatus includes a light source and a photosensor. In an information write operation, a light emitted from the light source is sensed by the solar cell. In an information read operation, an emission light from the light source is irradiated onto a pattern presented on the LCD so as to sense a reflection light or a transmission light thereof by the photosensor. Data communication can be achieved between the IC card and the read/write apparatus without necessitating any mechanical contact therebetween.

FIG. 1

EP 0 498 582 A2

BACKGROUND OF THE INVENTION

The present invention relates to a method of reading and writing information from and in an integrated circuit (IC) card in an IC card system which is to be adopted in the future for handling personal identification (ID) cards and credit cards related to digital cellular telephone sets wherein information can be arbitrarily written in and read from the IC card.

Description of the Prior Art

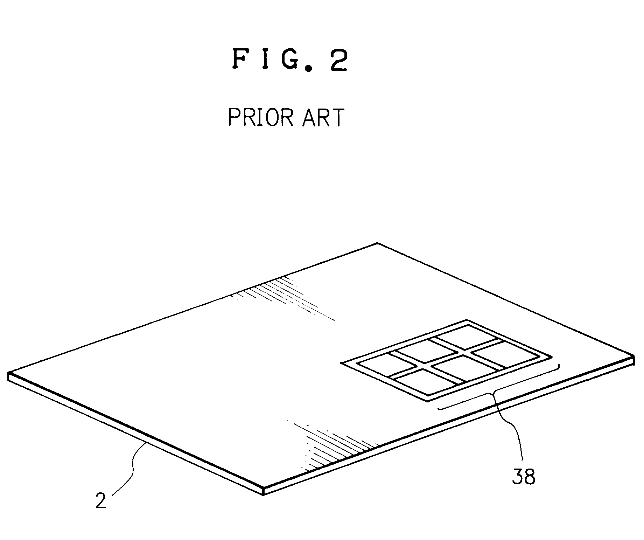

Heretofore, according to a method of reading and writing information from and in an IC card, there has been disposed, as shown in Fig. 2, contact terminals 38 in the IC card 2 so that the terminals 38 are mechanically connected to terminals disposed in an information read/write apparatus, thereby electrically communicating signals between the IC card and the read/write apparatus.

However, in this method, since the read/write apparatus is coupled with the IC card via contact points, there have appeared the following disadvantages. Namely, a contact failure is likely to occur and a predetermined contact pressure is required to be developed at the contact points; moreover, an appropriate force is needed to attach and to detach the IC card onto and from the read/write apparatus.

In addition, contact surfaces of the terminals are worn out through the repetitious usages of the IC card and the frequencies of the data read/write failures and occurrences of IC card failures are increased, which thereby leads to a considerable problem when guaranteeing the reliability and durability of the IC card.

SUMMARY OF THE INVENTION

It is therefore an object of the present invention to provide a system for writing and reading data in and from an IC card which is completely free from the mechanical contact, thereby solving the problem of the conventional technology.

In accordance with the present invention, there is provided an IC card information read system comprising an IC card and an IC card read apparatus. The IC card includes first information processing means for reading information from storage means integrally disposed in the IC card and processing the information, a liquid-crystal display (LCD) driver means for converting data processed by the first information processing means into an LCD driving signal, and an LCD means responsive to the LCD driving signal for displaying thereon a display pattern. The IC card read apparatus includes first photosensor means for optically reading the display pattern displayed by the LCD means of the IC card, signal converter means for converting an electric signal sensed by the first photosensor means into a data signal, and second information processing means for processing the data signal.

Moreover, in accordance with the present invention, an IC card information write system comprises an IC card write apparatus and an IC card. The IC card write apparatus includes third information processing means for generating from information inputted from an external device information to be written in the IC card, optical source driver means for generating a driving signal related to the write information outputted from the third information processing means, and an optical source for blinking a light therefrom depending on the driving signal. The IC card includes second photosensor means for receiving light emitted from a light source and for converting the emission light into an electric power, signal sensor means for sensing a blinking of a light superimposed on to an output from the second photosensor means, fourth information processing means for receiving as an input thereto information sensed by the signal sensor means and for processing the received signal, and storage means for storing therein information processed by the fourth information processing means.

Moreover, in accordance with the present invention, an IC card information read/write system comprises an IC card and an IC card read/write apparatus. The IC card includes second photosensor means for receiving a light representing a signal into an electric power, signal sensor means for sensing a blinking of a light superimposed on to an output from the second photosensor means, storage means for storing therein information sensed by the signal sensor means, control means for controlling read and write operations in the storage means, an LCD driver means for converting data read from the storage means into a driving signal of an LCD means, and LCD means responsive to the driving signal for displaying thereon a display pattern. The IC card read/write apparatus includes first photosensor means for optically reading the display pattern displayed by the LCD means, signal converter means for converting an electric signal sensed by the first photosensor means into a data signal, control means for controlling the data signal from the signal converter means and a signal to be written in the IC card, optical source driver means for generating a driving signal associated with write information outputted from the control means, and an optical source for blinking a light therefrom depending on the driving signal.

BRIEF DESCRIPTION OF THE DRAWINGS

The objects and features of the present invention will become more apparent from the consideration of the following detailed description taken in conjunction with the accompanying drawings in which:
Fig. 1 is a schematic block diagram showing an embodiment of an IC card read/write system in accordance with the present invention;

Fig. 2 is a diagram showing an example of the conventional IC card;

Fig. 3 is a diagram schematically showing an example of an information read operation in the system according to the present invention;

Fig. 4 is a diagram illustratively showing another example of an information read operation in the system in accordance with the present invention;

Fig. 5 is a signal timing chart showing the signals used in the information write operation in the system according to the present invention; and

Fig. 6 is a diagram showing an example of a solar cell voltage sensor circuit adopted in the system configuration of Fig. 1.

## DESCRIPTION OF THE PREFERRED EMBODIMENTS

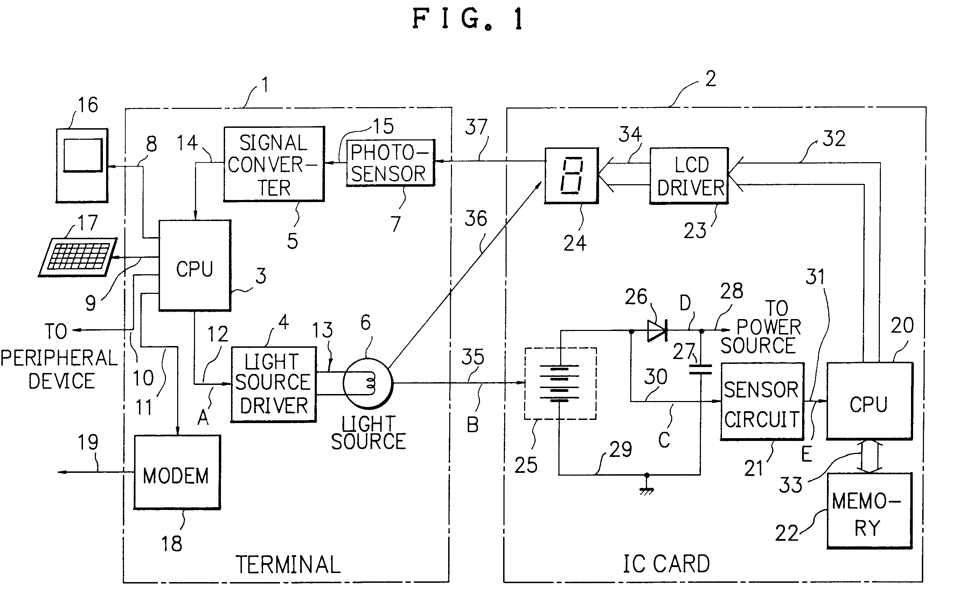

Referring now to the drawings, description will be given of the present invention. Fig. 1 shows an embodiment of an IC card read/write system in accordance with the present invention. This system is constituted with a terminal 1 employed as an IC card read/write apparatus and an IC card 2.

The terminal 1 includes a central processing unit (CPU) 3, a light source driver circuit 4, a light source 6, a photosensor 7, a signal converter circuit 5, and a modem 13. On the other hand, the IC card 2 includes a solar cell 25, a diode 26, a capacitor 27, a sensor circuit 27, a CPU 20, a memory 22, an LCD driver 23, and an LCD 24.

When the IC card 2 is installed onto the terminal 1, the terminal 1 activates the CPU 3 such that the driver circuit 4 turns the light source 6 on. A light-emitting diode or the like is advantageously employed as the light source 6. A light 35 illuminated from the light source 6 enters a surface of the solar cell 25 of the IC card 2. Accordingly, an electromotive force of the solar cell 25 is transferred via the diode 26 to the capacitor 27, thereby charging up the capacitor 27. The electric power accumulated in the capacitor 27 is adopted as the electric source of the IC card 2.

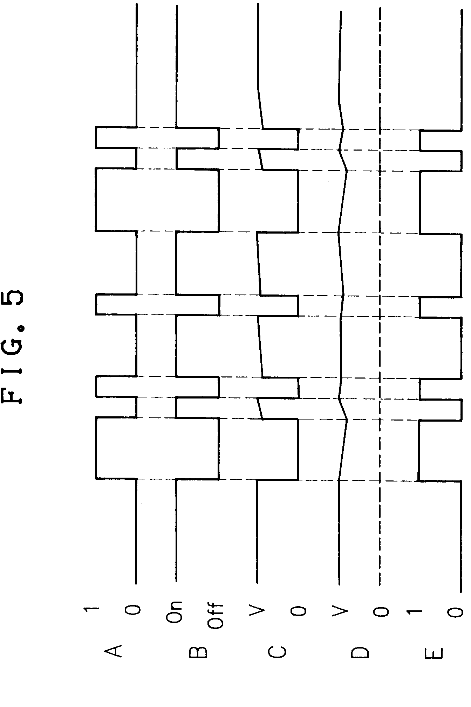

Instructions and write data to the IC card 2 are produced by the CPU 3 from information supplied from external devices such as a keyboard 17 and peripheral devices and/or supplied via a telephone line 19 and the modem 18. Such an instruction or write data is transmitted from the light source 6 driven by the driver circuit 4 under control of the CPU 3 in the form of a light blinking signal to the solar cell 25 of the IC card 2. For example, assuming a signal A of the timing chart shown in Fig. 5 to be sent as data, the light source 6 blinks or turns on and off as shown in a pattern B. Namely, when the signal A is not in the blinking state, the light source 6 is kept on to retain the internal electric power of the IC card 2.

In response to the blinking of the light source 6, the solar cell 25 produces an output signal 30 having a wareform C shown in Fig. 5. The waveform is, on one hand, rectified and smoothed respectively through the diode 26 and the capacitor 27 to be a power source 28 to the IC card 2. The diode 26 prevents, when the electromotive force is interrupted, the charging power of the capacitor 27 from reversely flowing into the side of the solar cell 25. The capacitor 27 supplies power, when the electromotive force is interrupted, to the sensor circuit 21, the CPU 20, and the memory 22, thereby developing a power source stabilizing function.

During the data receiving operation, in response to the blinking of the light, there appears in the power source 28 a slight ripple component as shown in the waveform of a signal D in Fig. 5. However, only if the rectifying and smoothing operations are satisfactorily accomplished, the function of the power source 28 is not deteriorated

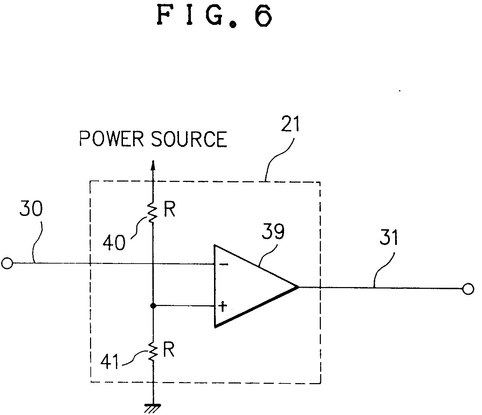

On the other hand, the output signal 30 from the solar cell 25 is sensed by the sensor circuit 21, thereby reproducing data shown as a signal E in Fig. 5 which is identical to that transmitted from the terminal 1. The reproduced signal is fed to the CPU 20. The sensor circuit 21 can be formed in a simple circuit constitution including a comparator 39 and resistors 40 and 41 as shown in Fig. 6. The CPU 20 decodes an instruction or information from the terminal 1. If the decoded result is an IC card write instruction, the CPU 20 writes the received write data in the memory 22. If the decoded result is an IC card read instruction, the CPU 20 reads data from the memory 22 and then transfers the data to the LCD driver 23. In response thereto, the driver 23 activates the LCD 24 to present a display pattern associated with the received data. There may be displayed various patterns such as characters, bar codes, graphics, images of which gradation alters with a lapse of time. When displaying a large amount of information, it may also be possible to change the display pattern with a lapse of time so as to sequentially display resultant patterns.

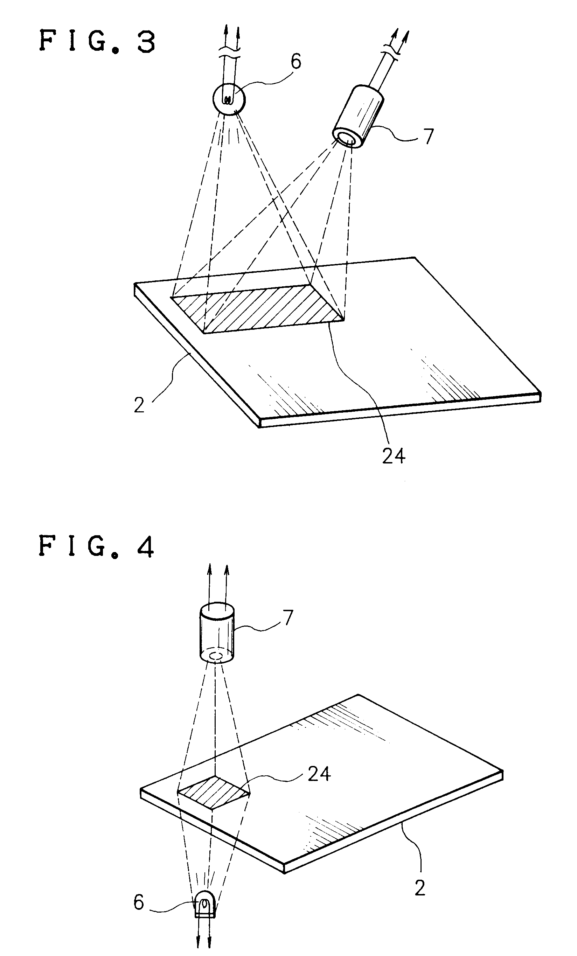

The display pattern presented on the LCD 24 is optically received and sensed by the photosensor 7 of the terminal 1. As a method of optically reading the display pattern presented on the LCD 24, there may be adopted a method in which the light emitted from the light source 6 is irradiated onto the LCD 24 so as to sense a light reflected therefrom as shown in Fig. 3 or a method in which the emission light from the light source 6 is illuminated onto the LCD 24 so as to sense a light which has passed therethrough as shown in Fig. 4. These pattern reading methods are included in the scope of the present invention. The light source 6 my be implemented by an electric bulb, a fluorescent lamp, an LED, a laser diode, or the like. The photosensor 7 may be formed with a device such as an image pickup tube, an image sensor including a charge coupled device (CCD), a photodiode, or a phototransistor.

The sense signal 15 from the photosensor 7 is converted by the signal converter circuit 5 into data associated with the display pattern and the resultant data is delivered to the CPU 3. On receiving the data, the CPU 3 processes and displays the data on the CRT 16, transfers the data to a peripheral device, or transmits the data via the modem 18 and the telephone line 19 to a host computer or the like installed at a remote location.

According to the system, through the operation above, data can be communicated between the IC card and the terminal without necessitating any mechanical contact.

As can be clearly understood from the foregoing description, in accordance with this system, thanks to the provisions of the solar cell and the liquid crystal display mounted on the IC card and the light source and the photosensor installed in the terminal, an IC card information read/write system can be materialized without using any mechanical contact between the IC card and the terminal. Since the system is, in principal, free from the mechanical wear related to the contact between the IC card and the terminal, there can be developed a high reliability and a satisfactory durability of the system.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

**Claims**

1. An IC card information read system for reading information from an IC card comprising:
   an IC card; and
   an IC card read apparatus,
   said IC card including:
   first information processing means for reading information stored in storage means integrally disposed in said IC card and processing the information;
   an LCD driver means for converting data processed by said first information processing means into a driving signal of LCD means; and
   LCD means responsive to the driving signal for presenting thereon a display pattern,
   said IC card read apparatus including:
   first photosensor means for optically reading the display pattern presented by said LCD means of said IC card;
   signal converter means for converting into a data signal an electric signal produced by said first photosensor means; and
   second information processing means for processing the data signal.

2. A system as claimed in claim 1, wherein:
   said LCD means includes a liquid crystal of a reflection light read type; and
   said first photosensor means reads a reflection light from said LCD means.

3. A system as claimed in claim 1, wherein:
   said LCD means includes a liquid crystal of a transmission light read type; and
   said first photosensor means reads a transmission light from said LCD means.

4. An IC card information write system for writing information in an IC card comprising:
   an IC card write apparatus, and
   an IC card; and
   said IC card write apparatus including:
   third information processing means for generating from information received from an external device information to be written in said IC card;
   light source driver means for generating a driving signal associated with the write information produced from said third information processing means; and
   a light source for blinking a light therefrom according to the driving signal,
   said IC card including:
   second photosensor means for receiving light emitted from said light source and converting the light into an electric power;
   signal sensor means for sensing a blinking of a light superimposed on to the output from said second photosensor means;
   fourth information processing means for receiving information sensed by said signal sensor means and processing the information; and
   storage means for storing therein the information processed by said fourth information processing means.

5. A system as claimed in claim 4, wherein said IC card further includes power supply means for supplying the electric power produced by said second photosensor means to said storage means and said signal sensor means.

6. A system as claimed in claim 4, wherein said second photosensor means is a solar cell.

7. A system as claimed in claim 5, wherein said power supply means includes a diode and a

8. A system as claimed in claim 5, wherein the driving signal generated from said light source driver means sets said light source to on when the light is not blinking, thereby supplying an internal power to the IC card.

9. An IC card information read/write system comprising:
    an IC card; and
    an IC card read/write apparatus,
    said IC card including:
        second photosensor means for receiving a light representing a signal and converting the light into an electric power;
        signal sensor means for sensing a blinking of a light superimposed onto an output from said second photosensor means;
        storage means for storing therein information sensed by said signal sensor means;
        control means for controlling a read operation and a write operation which are conducted in said storage means;
        LCD driver means for converting data read from said storage means into a driving signal of LCD means; and
        LCD means for presenting thereon a display pattern associated with the driving signal,
    said IC card read/write apparatus including:
        first photosensor means for optically reading the display pattern presented on said LCD means;
        signal converter means for converting into a data signal an electric signal sensed by said first photosensor means;
        control means for controlling the data signal from said signal converter means and a signal to be written in said IC card;
        light source driver means for generating a driving signal associated with the write information outputted from said control means; and
        a light source for blinking a light therefrom depending on the driving signal.

10. A system as claimed in claim 9, wherein after said IC card is attached onto said IC card read/write apparatus:
        said IC card read/write apparatus transfers an instruction for an information read or write operation via said light source to said IC card; and
        said IC card stores, in response to the instruction, information from said IC card read/write apparatus in said storage means or transfers information stored in said storage to said IC card read/write apparatus via said LCD means.

11. A system as claimed in claim 9, wherein said second photosensor means is a solar cell.

12. A system as claimed in claim 10, wherein said second photosensor means is a solar cell.

# FIG. 1

EP 0 498 582 A2

# F I G. 2

PRIOR ART

2

38

F I G. 3

F I G. 4

FIG. 5

# F I G. 6

POWER SOURCE